**Europäisches Patentamt**

**European Patent Office**

**Office européen des brevets**

(19)

(11) Veröffentlichungsnummer : **0 440 754 B1**

(12) **EUROPÄISCHE PATENTSCHRIFT**

(45) Veröffentlichungstag der Patentschrift :
**09.08.95 Patentblatt 95/32**

(51) Int. Cl.⁶ : **H02H 7/06,** B60R 16/02,
**H02K 9/04, H02K 9/24**

(21) Anmeldenummer : **90906896.7**

(22) Anmeldetag : **17.05.90**

(86) Internationale Anmeldenummer :
**PCT/DE90/00367**

(87) Internationale Veröffentlichungsnummer :
**WO 91/02397 21.02.91 Gazette 91/05**

(54) **GENERATOR MIT ZUSATZLÜFTER.**

(30) Priorität : **04.08.89 DE 3925793**

(43) Veröffentlichungstag der Anmeldung :
**14.08.91 Patentblatt 91/33**

(45) Bekanntmachung des Hinweises auf die
Patenterteilung :
**09.08.95 Patentblatt 95/32**

(84) Benannte Vertragsstaaten :
**DE ES FR GB IT SE**

(56) Entgegenhaltungen :
**CH-A- 90 163**
**DE-A- 3 231 152**
**FR-A- 1 454 558**
**FR-A- 2 301 123**
**FR-A- 2 515 893**

(73) Patentinhaber : **ROBERT BOSCH GMBH**
**Postfach 30 02 20**
**D-70442 Stuttgart (DE)**

(72) Erfinder : **SCHRAMM, Guenter**
**Taxisring 17**
**D-7143 Vaihingen-Enzweihingen (DE)**
Erfinder : **KOHL, Walter**
**Monreposstrasse 15**
**D-7120 Bietigheim (DE)**
Erfinder : **MEYER, Friedhelm**
**Falkenstrasse 29**
**D-7132 Illingen (DE)**

## Beschreibung

### Stand der Technik

Die Erfindung betrifft einen Drehstrom-Generator für Kraftfahrzeuge mit Zusatzlüfter nach der Gattung des Hauptanspruchs.

Bei Brennkraftmaschinen, die über einen sehr großen Drehzahlbereich betrieben werden, bei denen außerdem hohe Anforderungen an die Generatorausgangsleistungen gestellt werden, muß aus thermischen Gründen dafür gesorgt werden, daß der Generator mittels eines Zusatzlüfters mit Frischluft gekühlt wird. Diese Frischluft kann beispielsweise über eine Schlauchleitung von einem Bereich, der außerhalb des Motorraumes liegt, geliefert werden.

Wechselstromgeneratoren mit Fremdbelüftung, bei denen der Generator mit Hilfe eines Gebläses zusätzlich gekühlt wird, sind im Prinzip bereits bekannt. So ist beispielsweise aus der DE-OS 32 31 152 ein fremdbelüfteter Drehstrom-Generator bekannt, bei dem das Gebläse mittels eines dreiphasigen Asynchronmotors, dessen Kurzschlußläufer fest mit dem Gebläse gekoppelt ist, angetrieben wird. Dabei werden die feststehenden Wicklungen des Asynchronmotors zur Spannungsversorgung über einen Schalter an die Wechselstromwicklungen des Generators angeschlossen. Eine Überwachung der Funktion des Asynchronmotors und damit des Gebläses ist jedoch nicht vorgesehen, dadurch kann der Generator, falls das Gebläse nicht wunschgemäß anläuft, durch thermische Überlastung zerstört werden.

Die FR-OS 25 15 893 zeigt, daß bei einer Lichtmaschine zur Stromversorgung von Kraftfahrzeugen neben dem herkömmlichen Lüfter noch zusätzlich ein weiterer Lüfter eingesetzt werden kann, dessen Drehzahl bezüglich der Drehzahl der Lichtmaschine veränderbar ist und der vom Spannungsregler mit Strom gespeist wird.

Dieser Strom, der dem Erregerstrom entspricht, wird umso größer, je größer die Erregung der Lichtmaschine ist. Bei abgeschalteter Lichtmaschine wird der Erregerstrom gleich Null, daher läuft der Zusatzlüfter dann ebenfalls nicht.

Eine Überwachung auf Funktionsfähigkeit des Zusatzlüfters findet zwar statt, jedoch kann ein Defekt der Überwachungseinrichtung selbst nicht erkannt werden.

Aus der FR-OS 23 01 123 ist bekannt, daß zusätzliche Lüfter, die einen Elektromotor, der ein Fahrzeug antreibt, kühlen, auf Funktionsfähigkeit überwacht werden sollen, damit der Elektromotor nicht zu heiß wird. Diese Lüfter werden jedoch nicht im Zusammenhang mit Kühlproblemen bei einer Lichtmaschine im Kraftfahrzeug eingesetzt und es finden auch keine Überwachungen statt, die erkennen lassen, wenn die Überwachungseinrichtung selbst defekt ist.

### Vorteile der Erfindung

Der erfindungsgemäße Generator mit Zusatzlüfter mit den kennzeichnenden Merkmalen der Ansprüche hat gegenüber dem bekannten Generator den Vorteil, daß die Funktion des Zusatzlüfters ständig überwacht wird und daß die Vorrichtung zur Überwachung der Funktion des Zusatzlüfters mittels einer Eigendiagnose sich selbst überwacht. Fehler in der Funktionsfähigkeit des Zusatzlüfters sowie der Vorrichtung zur Überwachung des Zusatzlüfters werden angezeigt.

Weiterhin werden auch Fehler in der Beschaltung bzw. die Ablösung oder der Bruch einer Zuleitung angezeigt.

In einer weiteren Ausgestaltung der Erfindung wird die Vorrichtung zur Überwachung der Funktionsfähigkeit des Lüfters derart weitergebildet, daß die Ansteuerung des Lüfters mit Hilfe dieser Vorrichtung bewerkstelligt werden kann. Dabei kann der Zusatzlüfter beispielsweise in Abhängigkeit von der Temperatur des Gleichrichters im Generator ein- oder ausgeschaltet werden.

Durch die in den Unteransprüchen aufgezeigten Maßnahmen sind vorteilhafte Weiterbildungen und Verbesserungen des im Hauptanspruch angegebenen Generators mit Zusatzlüfter möglich.

### Zeichnung

Ein Ausführungsbeispiel der Erfindung ist in der Zeichnung dargestellt und wird in der nachfolgenden Beschreibung näher erläutert. Dabei zeigt Figur 1 ein erstes Ausführungsbeispiel der Erfindung und Figur 2 zeigt das dazugehörige Schaltbild der Vorrichtung zur Lüfterüberwachung. In Figur 3 ist ein zweites Ausführungsbeispiel aufgezeigt, wobei Figur 4 einen Schaltplan der Vorrichtung zur Lüftersteuerung bzw. -überwachung angibt Gleiche Bauteile sind, wo es zweckdienlich erschien, mit denselben Bezugszeichen versehen.

Beschreibung

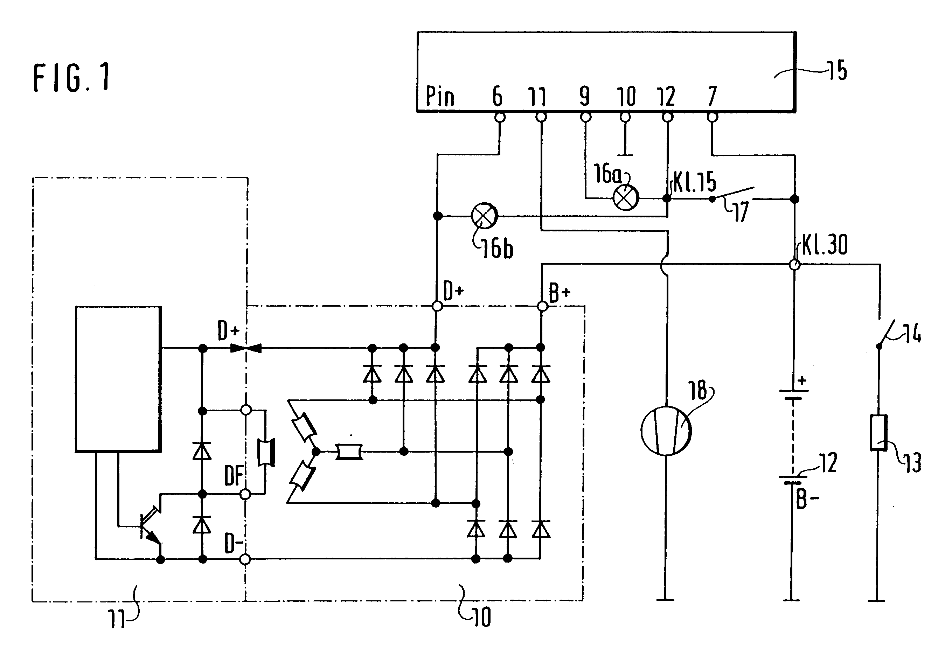

In Figur 1 ist ein Kraftfahrzeug-Bordnetz dargestellt mit einem Generator 10, der die Klemmen D-, DF, D+ und B+ aufweist. Der Generator 10 ist mit einem Spannungsregler 11 über die Klemmen D-, DF und D+ verbunden. Klemme D- des Generators 10 bzw. Spannungsreglers 11 ist mit Masse verbunden.

An die Klemme B+ ist eine weitere Klemme Kl.30 angeschlossen, zwischen Klemme Kl.30 und Masse liegt die Batterie 12 sowie die Verbraucher 13, die über einen Schalter 14 an Klemme Kl.30 angeschlossen bzw. von Klemme Kl.30 getrennt werden können.

Eine Vorrichtung 15 zur Lüfterüberwachung, die insgesamt zwölf Anschlußmöglichkeiten (Pins) enthält, ist über Pin 6 mit der Generatorklemme D+, über Pin 7 mit Klemme Kl.30 und über Pin 11 mit einem Zusatzlüfter 18, der zur Generatorbelüftung vorgesehen ist, verbunden, dabei ist der Zusatzlüfter 18 außerdem mit Masse verbunden.

Pin 9 der Vorrichtung 15 zur Lüfterüberwachung ist über eine Anzeigelampe 16a mit einer Klemme Kl.15 verbunden, die wiederum mit Pin 12 Verbindung hat. Statt der Anzeigelampe 16a kann auch eine Leuchtdiode oder eine akustische Anzeigeeinrichtung vorgesehen werden. An Klemme Kl.15 ist der Fahrschalter 17 angeschlossen, der außerdem an Klemme Kl.30 und Pin 7 der Vorrichtung 15 zur Lüfterüberwachung angeschlossen ist. Zwischen Klemme Kl.15 und D+ ist außerdem eine Ladekontrollampe 16b geschaltet.

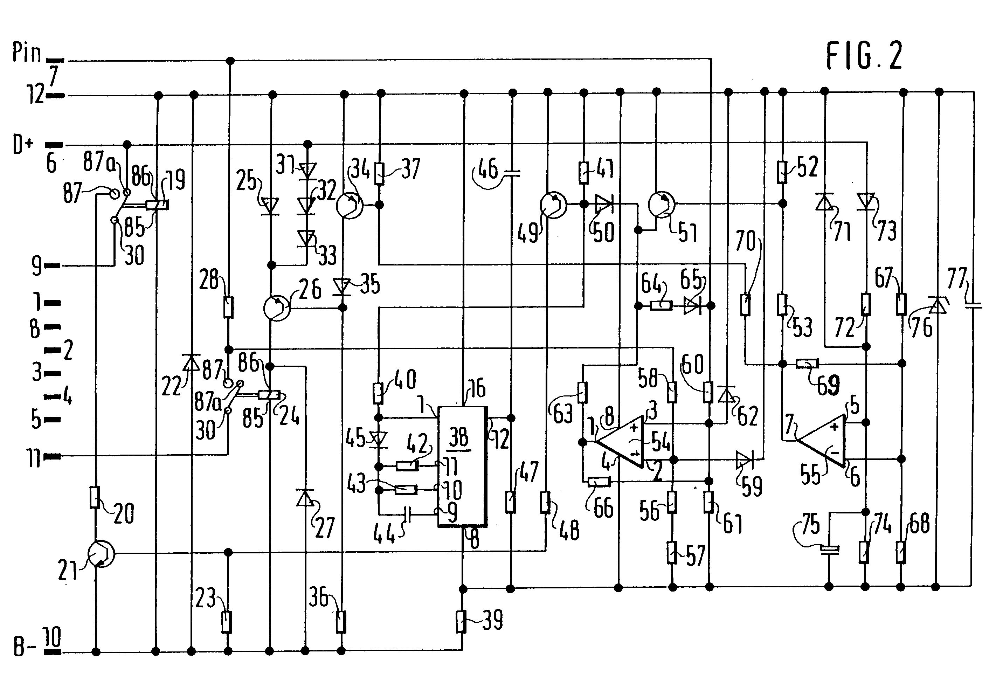

Die Vorrichtung 15 zur Lüfterüberwachung ist in Figur 2 als detaillierter Schaltplan wiedergegeben. Die Pins 1 - 12 der Vorrichtung 15 zur Lüfterüberwachung sind wie in Figur 1 dargestellt mit den Klemmen K1.30, Kl115, D+, B- sowie mit der Anzeigelampe 16 und dem Zusatzlüfter 18 verbunden, wobei die Pins 1, 2, 3, 4, 5 und 8 nicht belegt sind. B- ist der mit Masse verbundene Minus-Pol der Batterie 12.

Der schaltungsmäßige Aufbau der Vorrichtung 15 zur Lüfterüberwachung ist wie folgt: Pin 12 ist über ein Relais 19, das die Kontakte 30, 85, 86, 87a und 87 aufweist, mit Pin 10 verbunden. Dabei ist bei angezogenem Relais 19 Pin 6 über die Kontakte 87a und 30 mit Pin 9 verbunden, bei nicht angezogenem Relais ist dagegen Pin 9 über Kontakt 30 und Kontakt 87 sowie die Reihenschaltung eines Widerstandes 20 und eines Transistors 21 mit Pin 10 verbunden. Parallel zum Relais 19 liegt eine Diode 22 zwischen Pin 12 und Pin 10, außerdem liegt ein Widerstand 23 zwischen der Basis des Transistors 21 und Klemme 10.

Ein weiteres Relais 24 mit den Klemmen 30, 85, 86, 87a, 87, das zum Ein- bzw. Ausschalten des Zusatzlüfters 18 dient, ist über eine Reihenschaltung einer Diode 25 und eines Transistors 26 an Pin 12 angeschlossen und weiterhin über Kontakt 85 mit Pin 10 in Verbindung. Parallel zum Relais 24 liegt eine Diode 27.

Bei angezogenem Relais 24 ist der Zusatzlüfter 18 über die Kontakte 30 und 87 des Relais 24 und einen Widerstand 28 an Pin 7 angeschlossen. Die Serienschaltung aus drei Dioden 31, 32, 33 liegt zwischen Pin 6 und dem Emitter des Transistors 26, dabei sind diese Dioden in Durchlaßrichtung gepolt.

An die Basis des Transistors 26 ist die Reihenschaltung eines Transistors 34, einer Diode 35 und eines Widerstandes 36 so angeschlossen, daß der Emitter des Transistors 24 mit Pin 12 in Verbindung steht, die Katode der Diode 35 mit der Basis des Transistors 26 verbunden ist und der Widerstand 36 an Pin 10 liegt. Zwischen der Basis des Transistors 34 und Pin 12 liegt ein weiterer Widerstand 37.

Ein erster integrierter Schaltkreis (IC) 38 ist mit seinem Eingang El über die Widerstände 40, 41 mit Pin 12 verbunden, Eingang E16 ist direkt mit Pin 12 und Eingang E8 ist über Widerstand 39 an Pin 10 gelegt. Im übrigen ist 38 mit den Widerständen 42, 43, dem Kondensator 44 und der Diode 45 beschaltet, die zur Frequenzeinstellung des Oszillators von IC 38 bzw. zur Stillsetzung des Oszillators dienen. Ein weiterer Eingang von 38 ist über den Kondensator 46 an Pin 12 über den Widerstand 47 und den Widerstand 39 an Pin 10 angeschlossen.

Von der Basis des Transistors 21 führt ein Schaltungszweig über einen Widerstand 48 und einen Transistor 49 zu Pin 12 der Vorrichtung 15 zur Lüfterüberwachung. Die Basis des Transistors 49 ist einerseits über einen Widerstand 41 mit Pin 12 verbunden und andererseits über eine Diode 50 sowie die Kollektor-Emitter-Strecke eines weiteren Transistors 51 mit Pin 12 verbunden, wobei die Basis des Transistors 51 am Spannungsteiler 52, 53 angeschlossen ist.

Ein weiterer integrierter Schaltkreis, der die zwei Operationsverstärker 54 und 55 enthält, ist über ein Widerstandsnetzwerk an Pin 10 gelegt. Die Beschaltung der beiden Operationsverstärker 54 und 55 ist wie folgt: Der invertierende Eingang E2 des Operationsverstärkers 54 ist über die Widerstände 56, 57 und 39 an Pin 10 angeschlossen, über die Widerstände 58 und 28 an Pin 7 und über die Diode 59 an Pin 12. Der nicht invertierende Eingang E3 des Operationsverstärkers 54 liegt am Spannungsteiler 60, 61 und über die Diode 62 an Pin 12. Der Ausgang Al des Operationsverstärkers 54 ist über den Widerstand 63 mit dem Transistor 51 und über die Bauelemente 64 und 65 an Pin 7 angeschlossen. Ein Rückkopplungswiderstand 66 liegt zwischen dem Ausgang A1 des Operationsverstärkers 54 und seinem Eingang E3.

Zur Spannungsversorgung ist der Operationsverstärker 54 an Pin 12 und über den Widerstand 39 an Pin 10 angeschlossen.

EP 0 440 754 B1

Der Operationsverstärker 55 ist mit seinem invertierenden Eingang E6 an den Spannungsteiler 67, 68 sowie über die Widerstände 69, 70 an die Basis des Transistors 34 angeschlossen. Der nicht invertierende Eingang E5 des Operationsverstärkers 55 ist über die Diode 71 an Pin 12 und über den Widerstand 72 und die Diode 73 an Pin 6 angeschlossen. Weiterhin liegt zwischen dem nicht invertierenden Eingang des Operationsverstärkers 55 und dem Widerstand 39 die Parallelschaltung eines Widerstandes 74 und eines Kondensators 75.

Zur Stabilisierung der Versorgungsspannung liegt eine Zenerdiode 76 zwischen Pin 12 und Pin 10, zu dieser Zenerdiode 76 ist ein Glättungskondensator 77 parallel geschaltet.

Funktionsweise der Vorrichtung 15 zur Lüfterüberwachung:

Nach dem Einschalten des Fahrschalters 17 läuft zunächst eine Eigendiagnose ab, bei der überprüft wird, ob die Vorrichtung 15 zur Lüfterüberwachung selbst funktionsfähig ist, ob die Anschlußleitungen korrekt angeschlossen sind und ob die Anzeigelampe 16a in funktionsfähigem Zustand ist. Falls alle überprüften Elemente in ordnungsgemäßem Zustand sind, leuchtet nach dem Einschalten des Zünd- bzw. Fahrschalter 17 die Anzeige 16 für ungefähr zwei Sekunden auf und erlischt dann.

In Abhängigkeit von der Generatorspannung an D+ wird der Zusatzlüfter eingeschaltet. Die Funktion des Zusatzlüfters wird durch Kontrolle der Stromaufnahme überprüft. Eine Anzeige erfolgt, wenn eine Unterbrechung in der Zuleitung zum Zusatzlüfter 18 oder zur Klemme Kl.30 auftritt oder bei zu geringer Stromaufnahme des Zusatzlüfters 18, z.B. bei J 3A.

1. Diagnosetest

Nach dem Einschalten des Fahrschalters 17 wird an Pin 12 der Vorrichtung 15 zur Lüfterüberwachung über Klemme K1.15 Spannung angelegt. Das Relais 19 schaltet um und verbindet Kontakt 30 mit Kontakt 87, so daß die Anzeigelampe 16 über den Transistor 21 ein- bzw. ausgeschaltet werden kann.

Der im integrierten Schaltkreis 38 enthaltene Oszillator schwingt mit einer stabilen Frequenz, die mit den Widerständen 42 und 43 sowie dem Kondensator 44 eingestellt werden kann. Ein im integrierten Schaltkreis 38 enthaltener Zähler beginnt zu zählen und läuft hoch. Zu Beginn des Zählens liegt der Zählerausgang Al von 38 auf Low-Pegel L, Transistor 49 und Transistor 21 sind daher leitend und die Anzeigelampe 16 leuchtet.

Nach ca. zwei Sekunden schaltet der Ausgang A1 des integrierten Schaltkreises 38 auf High-Pegel H um, die Transistoren 49 und 21 sperren daher und die Anzeigelampe 16a erlischt. Gleichzeitig wird über die Diode 45 der Oszillator im IC 38 stillgesetzt.

Beim erneuten Einschalten des Fahrschalters 17 wird der in 38 enthaltene Zähler durch einen Spannungsimpuls über den Kondensator 46 am Eingang 12 des IC 38 auf Null gesetzt und das Hochzählen im Zähler beginnt von vorne.

2. Kühlung durch den Zusatzlüfter

Steigt die Spannung an Klemme D+ des Generators, die auch an Pin 6 der Vorrichtung 15 zur Lüfterüberwachung anliegt, über einen bestimmten Wert an, so daß am Operationsverstärker 55 die Eingangsspannung am invertierenden Eingang E6 größer wird als die Eingangsspannung am nicht invertierenden Eingang E5, dann schaltet der Ausgang A7 des Operationsverstärkers 55 von L auf H, dadurch sperrt der Transistor 34, gleichzeitig wird Transistor 26 leitend und das Relais 24 schaltet um, so daß der Zusatzlüfter 18 über die Kontakte 87 und 30 des Relais 24 mit Spannung versorgt wird und anläuft. Da Transistor 51 gleichzeitig sperrt, wird ein Aufleuchten der Anzeigelampe 16a über den Transistor 49 ermöglicht.

Solange an Klemme D+ keine Spannung auftritt, verhindert der leitende Transistor 51 eine Anzeige. Dies tritt während des Anlaufs ein.

3. Störmeldung

Während des Betriebs werden Störungen durch ein Aufleuchten der Anzeigeampe 16a angezeigt. Dabei sind mehrere verschiedene Störungen erkennbar bzw. anzeigbar.

3.1. Stromaufnahme des Zusatzlüfters 18 ist zu klein

Der Operationsverstärker 54 des IC2 vergleicht an seinen Eingängen E2 und E3 den Soll- mit dem Ist-Wert der anliegenden Spannungen. Ist die Stromaufnahme des Lüfters infolge einer Fehlfunktion zu klein, beispielsweise I < 3 A, dann tritt am Widerstand 28 ein Spannungsabfall auf, der unterhalb des Soll-Wertes liegt. Daher tritt am Ausgang A1 des Operationsverstärkers 54 ein Low-Signal L auf, die Transistoren 49 und 21 sind

4

daher leitend und die Anzeigelampe 16a leuchtet und zeigt damit den Fehlerfall an.

3.2. Unterbrechung in der Zuleitung zum Zusatzlüfter 18

Tritt in der Zuleitung zum Zusatzlüfter 18 eine Unterbrechung auf, kann durch den Widerstand 28 kein Strom mehr fließen, der Spannungsabfall am Widerstand 28 ist daher Null, damit ist die Eingangsspannung am Eingang E2 des Operationsverstärkers 54 größer als die Spannung an seinem Eingang E3, am Ausgang des Operationsverstärkers 54 tritt daher ein Low-Signal auf, die Transistoren 49 und 21 sind daher in leitendem Zustand und das Anzeigeelement 16 leuchtet auf.

3. Defekte Sicherung an Klemme Kl.30

Fällt die Sicherung an Klemme 30 infolge eines Kurzschlusses im Zusatzlüfter 18 aus, verharren die beiden Relais 19 und 24 in eingezogenem Zustand. An Klemme 30 tritt daher ein negatives Potential auf, wodurch über den Widerstand 64 und die Diode 65 die beiden Transistoren 49 und 21 in leitenden Zustand versetzt werden und die Anzeigelampe 16a zur Anzeige gebracht wird.

Die Vorrichtung zur Lüfterüberwachung 15 enthält noch eine Diode 76, die in Sperrichtung zwischen Pin 12 und dem Widerstand 39, der wiederum an Pin 10 liegt, geschaltet ist. Diese Zehnerdiode hat die Aufgabe, die Versorgungsspannung zu stabilisieren. Die Kondensatoren 75 und 77 sind Glättungskondensatoren.

Die Diode 22, die zwischen Pin 12 und Pin 10 liegt, dient zum Schutz der Schaltungsanordnung vor negativen Spannungsspitzen. Die weiteren Dioden 59, 62 und 71 schützen die Eingänge der Operationsverstärker 54 und 55 vor Überspannung.

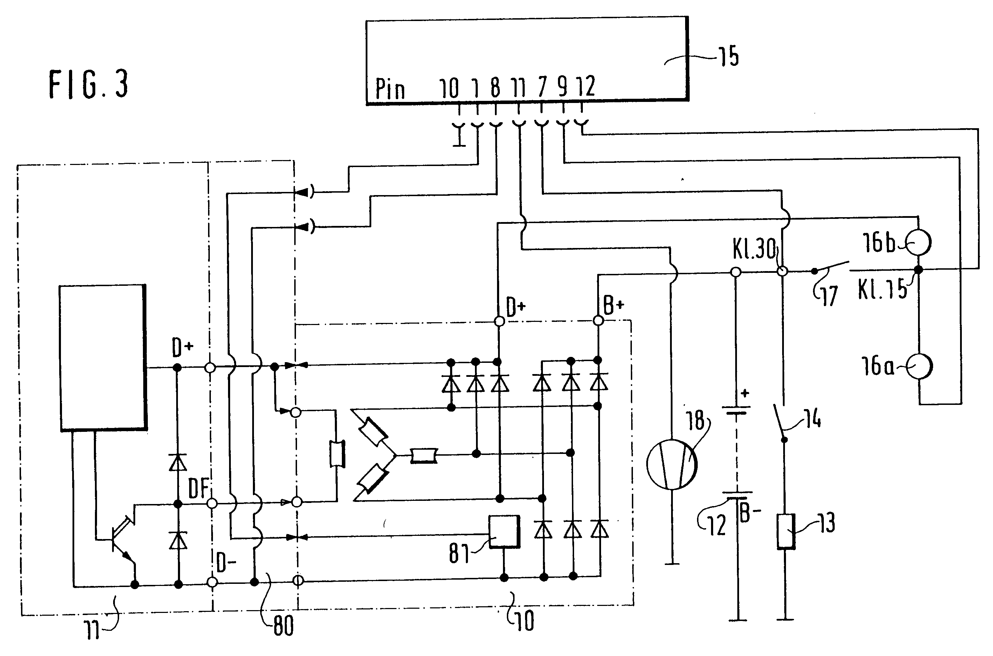

In Figur 3 ist das Übersichtsschaltbild eines weiteren Ausführungsbeispiels dargestellt. Dabei ist mit 10 ein Generator bezeichnet, der über Bürstenhalter 80 mit einem Spannungsregler 11 verbunden ist. An den Generator sind in üblicher Weise eine Batterie 12 sowie über einen Schalter 14 Verbraucher 13 angeschlossen. Weiterhin ist an den Pluspol der Batterie 12 über einen Verbindungspunkt Kl.30 der Fahrschalter 17 angeschlossen, dessen zweite Klemme mit Kl.15 bezeichnet ist.

Die Klemme Kl.15 des Fahrschalters 17 ist einmal an eine Ladeanzeige 16b z.B. die Ladekontrollampe und weiterhin an eine Funktions- und Fehleranzeige 16a angeschlossen.

Eine Vorrichtung 15 zur Lüftersteuerung bzw. -überwachung mit den Pins 1 - 12 steht mit dem Generator-Bordnetzsystem in Verbindung, wobei die Belegung der Pins wie folgt vorgenommen wird:

Pin 10 liegt an Masse, Pin 1 ist mit einem Anschluß eines Temperaturmessers 81, der dem Generator 10 zugeordnet ist, verbunden. Pin 8 ist mit der Generator- bzw. Reglerklemme D- verbunden und weiterhin mit dem anderen Anschluß des Temperaturmessers 81. Pin 11 ist über einen Zusatzlüfter 18, der zur Kühlung des Generators mit Frischluft vorgesehen ist, mit Masse verbunden, Pin 7 ist an Klemme Kl.30 des Fahrschalters 17 angeschlossen, Pin 9 ist an die Reihenschaltung der beiden Anzeigen 16a und 16b angeschlossen, die wiederum mit der Generatorklemme D+ verbunden sind und Pin 12 ist mit Klemme Kl.15 des Fahrschalters 17 verbunden. Die Pins 2, 3, 4, 5, 6 der Vorrichtung 15 zur Lüftersteuerung bzw. -überwachung sind nicht belegt.

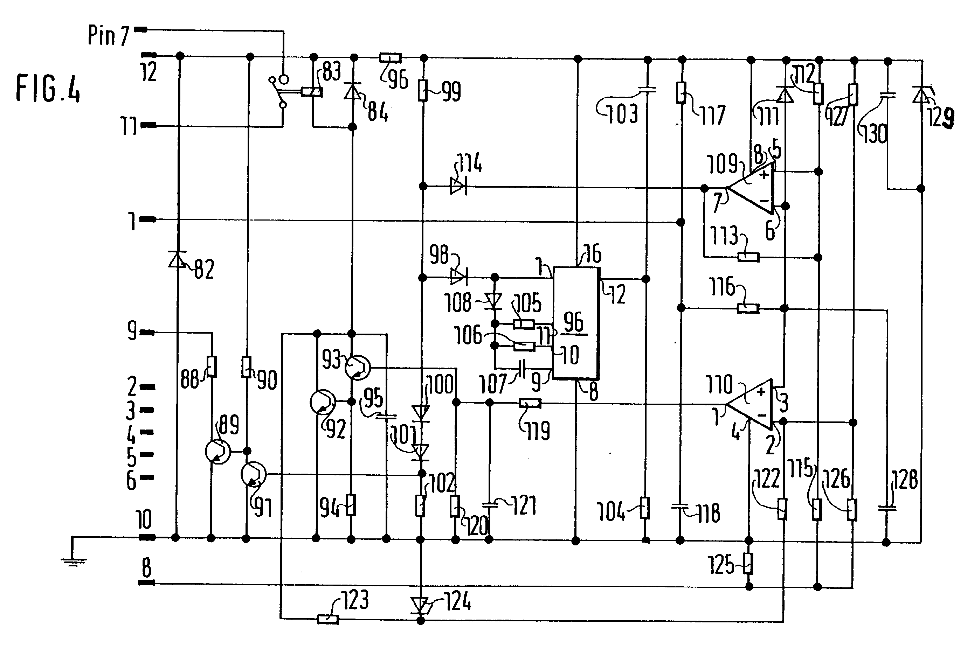

Die Vorrichtung 15 zur Lüftersteuerung bzw. -überwachung ist in einem ausführlichen Schaltbild in Figur 4 dargestellt. Am Eingang der Vorrichtung 15 zur Lüftersteuerung bzw. -überwachung liegt zwischen den Pins 12 und 10 eine Diode 82, die die Schaltung vor negativen Spannungsspitzen schützen soll.

Ein Relais 83 mit den üblichen Klemmen 30, 85, 86, 87a, 87 ist so an die Pins 7, 12 und 11 angeschlossen, daß bei eingerücktem Relais Pin 7 mit Pin 11 verbunden ist und bei ausgerücktem Relais diese Verbindung unterbrochen wird. Parallel zum Relais 83 liegt eine Diode 84.

Pin 9 und Pin 10 sind über die Reihenschaltung eines Widerstands 88 und eines Transistors 89 verbunden, wobei die Basis des Transistors 89 über einen weiteren Widerstand 90 mit Pin 12 und über einen weiteren Transistor 91 mit Pin 10 verbunden ist. Weitere Transistoren 92, 93 sind an der Spule 85 des Relais 83 angeschlossen, wobei der Emitter des Transistors 93 mit der Basis des Transistors 92 verbunden ist und über einen Widerstand 94 an Pin 10 liegt.

Parallel zur Kollektor-Emitter-Strecke des Transistors 92 liegt ein Kondensator 95.

Ein integrierter Schaltkreis 96 mit 16 Ein- bzw. Ausgangs-Anschlüssen ist wie folgt verschaltet: Eingang E16 über Widerstand 96 mit Pin 12, Ausgang A1 über Diode 98 und Widerstand 99 mit Widerstand 96 und über die Dioden 100 und 101 sowie den Widerstand 102 mit Pin 10, E8 direkt mit Pin 10 und E12 an den Verbindungspunkt eines Kondensators 103 und eines Widerstandes 104, die ihrerseits zwischen Pin 12 und Pin 10 geschaltet sind.

Der integrierte Schaltkreis 96 enthält u. a. einen Oszillator, dessen Frequenz durch die Widerstände 105, 106 und den Kondensator 107 bestimmt wird, wobei diese Bauelemente an die Eingänge 11, 10, 9 angeschlossen sind und über eine Diode 108 mit Ausgang A1 des integrierten Schaltkreises 96 verbunden sind.

Ein weiterer integrierter Schaltkreis, der die Operationsverstärker 109 und 110 umfaßt, ist wie folgt angeschlossen: Der invertierende Eingang E6 des Operationsverstärkers 109 ist über eine Diode 111 und den Widerstand 96 mit Pin 12 verbunden und außerdem direkt mit dem nicht invertierenden Eingang E3 des Operationsverstärkers 110. Der nicht invertierende Eingang des Operationsverstärkers 109 ist über einen Widerstand 112 mit dem Widerstand 96, über einen Widerstand 113 mit dem Ausgang A7 und einer Diode 114 verbunden und über einen weiteren Widerstand 115 mit Pin 8 verbunden.

Der nicht invertierende Eingang des Operationsverstärkers 110 ist über einen Widerstand 116 zwischen einem Widerstand 117 und einem Kondensator 118 geschaltet. Der Ausgang A1 des Operationsverstärkers 110 wird über einen Widerstand 119 auf die Basis des Transistors 93 geführt, zwischen dem Widerstand 119 und Pin 10 ist noch die Parallelschaltung eines Widerstandes 120 und eines Kondensators 121 gelegt.

Der invertierende Eingang E2 des Operationsverstärkers 110 ist über die Serienschaltung zweier Widerstände 122 und 123 mit dem Kollektor des Transistors 92 verbunden, dabei liegt eine Zenerdiode 124 zum Schutz vor Überspannung zwischen dem Verbindungspunkt der Widerstände 122 und 123 und Klemme 10.

Von Pin 8 führt eine Verbindung über einen Widerstand 125 zum Eingang E4 des Operationsverstärkers 110 und weiterhin über einen Widerstand 126 zum invertierenden Eingang E2 des Operationsverstärkers 110 und über einen Widerstand 127 und den Widerstand 96 zum Pin 12.

Ein Glättungskondensator 128 liegt zwischen dem nicht invertierenden Eingang E3 des Operationsverstärkers 110 und seinem Eingang E4. Eine Zenerdiode 129 mit parallel geschaltetem Kondensator 130 ist einerseits an Pin 10 und andererseits über den Widerstand 97 an Pin 12 angeschlossen.

Die Schaltungsanordnung des Ausführungsbeispiels 2 nach Figuren 3 und 4 weist folgenden Funktionsweise auf:

Nach dem Einschalten des Zündschalters 17 läuft zunächst eine Eigendiagnose ab. Dabei wird überprüft, ob die Schaltung der Vorrichtung 15 zur Lüftersteuerung bzw. -überwachung selbst in funktionsfähigem Zustand ist und ob die Anschlußleitungen bzw. die Anzeigelampe in funktionsfähigem Zustand sind. Dabei leuchtet bei einer funktionsfähigen Anlage die Anzeigelampe 16 nach dem Einschalten des Zünd- bzw. Fahrschalters 17 für ca. zwei Sekunden auf und erlischt dann.

Danach wird in Abhängigkeit von der Temperatur des Gleichrichters im Generator der Zusatzlüfter 18 ein- oder ausgeschaltet. Dabei sind folgende Betriebszustände vorgesehen:

```
Bei Temperaturen                  < 134 °C: Lüfter dauernd aus.

Bei Temperaturen von 134 °C -  154 °C: Lüfter im Taktbetrieb.

Bei Temperaturen                  > 154 °C: Lüfter dauernd ein.

Bei Temperaturen                  > 165 °C: Übertemperatur, Anzeige 16

                                            leuchtet auf.
```

Bei einer defekten Anlage, wenn beispielsweise eine Fühlerleitung unterbrochen ist, leuchtet die Anzeigelampe 16 direkt auf. Bei einem defekten Zusatzlüfter 18 leuchtet die Anzeigelampe 16 erst nach Überschreiten einer bestimmten Temperaturschwelle auf.

Falls ein Anschlußstecker abgefallen ist, bleibt die Lampe dauernd ausgeschaltet, auch während des Diagnosetests, dieser Fehler kann daher gleich beim Diagnosetest erkannt werden.

1. Diagnosetest

Beim Einschalten des Fahrschalters 17 wird über Klemme Kl.15 des Fahrschalters 17 Spannung an Pin 12 angelegt. Über den Widerstand 90 wird der Transistor 89 leitend, so daß die Anzeigelampe 16a zwischen Klemme Kl. 15 und Pin 9 leuchtet.

Der Oszillator des intergrierten Schaltkreises IC 96 schwingt mit einer stabilen Frequenz, die mit Hilfe der Widerstände 105, 106 sowie des Kondensators 107 eingestellt wird. Der im IC 96 integrierte Zähler läuft daher hoch.

Beim Zählbeginn liegt der Zählerausgang A1 auf Low-Pegel L, daher wird der Strom vom Widerstand 99 über die Diode 98 nach Minus geleitet. Nach ca. zwei Sekunden erreicht der Zähler einen vorbestimmten Wert und der IC 96 schaltet am Ausgang A1 auf High-Pegel H um, dadurch wird der Transistor 91 über den Widerstand 99, Dioden 100, 101 leitend und Transistor 89 sperrt. Die Anzeigelampe 16 erlischt und über Diode 108 wird der Oszillator im IC 96 stillgesetzt.

Beim erneuten Einschalten des Fahrschalters 17 wird der im IC 96 integrierte Zähler durch einen Span-

6

nungsimpuls über Kondensator 103 am Eingang E12 des IC 96 auf Null gesetzt und das Hochzählen des Zählers beginnt von vorne.

2. Zusatzkühlung (Zusatzlüfter läuft)

Der Meßfühler 81 am Gleichrichter im Generator 10 legt proportional zur Temperatur eine Spannung über die Widerstände R117 und R116 an den Eingang E3 des Operationsverstärkers 110 an. Ist die Spannung an Eingang E3 größer als die Spannung E2 des Operationsverstärkers 110, werden die Transistoren 92 und 93 über Widerstand 119 leitend, das Relais 83 zieht ein und der Lüfter läuft an, wobei der Strom von Pin 7 über Kontakt 87a und Kontakt 30 nach Pin 11 fließt.

3. Störmeldung (Aufleuchten der Anzeigelampe 16 während des Betriebs)

Fällt der Zusatzlüfter 18 infolge eines Fehlers aus, steigt die Spannung am Eingang E6 des Operationsverstärkers 109 an. Ist die Spannung am Eingang E6 größer als die Spannung am Eingang E5, wird der Strom über Widerstand 99 und Diode 114 am Ausgang A7 des Operationsverstärkers 109 nach Minus abgeleitet. Transistor 91 sperrt daher und Transistor 89 wird leitend, es fließt daher ein Strom von Pin 9 durch Widerstand 88 und den Transistor 89 zu Pin 10, wodurch die Anzeigelampe 16 leuchtet.

Fällt dagegen der Stecker zum Temperaturfühler 81 ab, so läuft der Zusatzlüfter 18, die Anzeige 16 leuchtet jedoch auf.

Zum Schutz vor Spannungsspitzen bzw. zur Verbesserung der Eigenschaften der Vorrichtung 15 zur Lüftersteuerung bzw. -überwachung sind folgende Einrichtungen vorgesehen:

Die Diode 82 dient zum Schutz vor negativen Spannungsspitzen, die Diode 129 dient zur Stabilisierung der Versorgungsspannung. Die weiteren Dioden 111 und 124 schützen die Eingänge der Operationsverstärker 109 und 110 vor Überspannung, dabei ist die Diode 124 als Zenerdiode realisiert.

Der Widerstand 122 bestimmt die Hysterese des Operationsverstärkers 110 im Lüfterbetrieb, und die Kondensatoren 118 und 128 sollen die Meßspannung glätten.

## Patentansprüche

1. Drehstromgenerator für ein Kraftfahrzeug, bei dem wenigstens ein Zusatzlüfter (18) vorgesehen ist, dessen Luftstrom zur Kühlung des Generators (10) dient, wobei der Zusatzlüfter (18) selbst mit Spannung versorgt wird und eine Einrichtung (15) vorgesehen ist, die die Drehzahl des Zusatzlüfters (18) beeinflußt, dadurch gekennzeichnet, daß die Spannungsversorgung mittels des Generators (10) oder der Batterie (12) erfolgt, daß die Einrichtung (15) zur Beeinflussung der Drehzahl des Zusatzlüfters diese durch Ein- oder Ausschalten vornimmt und zusätzlich eine Einrichtung (15) zur Überwachung der Funktionsfähigkeit des Zusatzlüfters (18) umfaßt, die auch ihre eigene Funktionsfähigkeit überwacht und auftretende Störungen anzeigt, wobei die Überprüfung der Funktionsfähigkeit jeweils nach dem Einschalten des Fahrschalters erfolgt und nach einer vorgebbaren Zeit wieder beendet wird und die Anzeige bei erkannten Fehlern mit Hilfe einer zusätzlichen Anzeigelampe (16) oder einer LED oder einer akustischen Anzeigeeinrichtung erfolgt.

2. Drehstromgenerator nach Anspruch 1, dadurch gekennzeichnet, daß die Zeit für die Überprüfung der Funktionsfähigkeit mittels Auszählen von Oszillatorimpulsen bestimmt wird.

3. Drehstromgenerator nach Anspruch 1 oder 2, dadurch gekennzeichnet, daß der Einrichtung (15) zur Steuerung und Überwachung des Zusatzlüfters (18) von der Temperatur des Gleichrichters im Generator (10) abhängige Signale zugeführt werden, die von einem entsprechenden Temperatursensor (81) geliefert werden und die Steuerung des Zusatzlüfters (18) in Abhängigkeit von diesen Temperatursignalen erfolgt.

## Claims

1. Three-phase generator for a motor vehicle, in which at least one auxiliary fan (18) is provided whose airflow serves to cool the generator (10), the auxiliary fan (18) itself being supplied with voltage and a device (15) being provided which influences the rotational speed of the auxiliary fan (18), characterized in that the voltage supply is performed by means of the generator (10) or the battery (12), in that the device (15) for influencing the rotational speed of the auxiliary fan undertakes this by switching on or off and additionally comprises a device (15) for monitoring the reliability performance of the auxiliary fan (18), which also monitors its own reliability performance and indicates faults occurring, the checking of the reliability performance being performed in each case after switching on of the driving switch and being terminated again after a prescribable time and the indication in the case of detected faults is performed with the aid of an additional indicator lamp (16) or an LED or an acoustic indicating device.

2. Three-phase generator according to Claim 1, characterized in that the time for checking the reliability performance is determined by means of counting oscillator pulses.

3. Three-phase generator according to Claim 1 or 2, characterized in that the device (15) for controlling and monitoring the auxiliary fan (18) is fed signals which depend on the temperature of the rectifier in the generator (10) and are delivered by a corresponding temperature sensor (81), and the control of the auxiliary fan (18) is performed as a function of these temperature signals.

**Revendications**

1. Alternateur triphasé pour un véhicule à moteur, dans le cas duquel il est prévu au moins un ventilateur additionnel (18) dont le flux d'air sert à refroidir l'alternateur (10), le ventilateur additionnel (18) étant lui-même alimenté en tension et un système (15) étant prévu pour influencer la vitesse de rotation du ventilateur additionnel (18), alternateur triphasé caractérisé en ce que l'alimentation en tension a lieu au moyen de l'alternateur (10) ou de la batterie (12), en ce que le système (15) qui sert à influencer la vitesse de rotation du ventilateur additionnel commande celle-ci en s'enclenchant ou se déclenchant et comprend en plus un système (15) qui sert à contrôler l'aptitude à fonctionner du ventilateur additionnel (18), qui contrôle aussi sa propre aptitude à fonctionner et qui indique les pannes qui surviennent, le contrôle de l'aptitude à fonctionner ayant lieu après le branchement du contact de marche et se terminant au bout d'un temps pouvant être prédéfini, et la signalisation, quand des défauts ont été détectés, ayant lieu à l'aide d'une lampe de signalisation additionnelle (16) ou d'une diode luminescente LED ou d'un système de signalisation acoustique.

2. Alternateur triphasé selon la revendication 1, caractérisé en ce que le temps pour le contrôle de l'aptitude à fonctionner est déterminé en décomptant des impulsions d'oscillateur.

3. Alternateur triphasé selon la revendication 1 ou 2, caractérisé en ce que l'on envoie des signaux qui sont fonction de la température du redresseur dans l'alternateur (10), au système (15) qui sert à commander et à contrôler le ventilateur additionnel (18), signaux qui sont délivrés par un détecteur de température (81) correspondant, la commande du ventilateur additionnel (18) ayant lieu en fonction de ces signaux de température.

FIG.1

Pin 6 11 9 10 12 7

15

16a
16b
Kl.15
17
Kl.30

D+ B+

D+
DF
D-

18
14
12
B-
13

11 10

EP 0 440 754 B1

FIG. 2

FIG.3

Pin 10 1 8 11 7 9 12

15

D+ B+

Kl.30 16b
17 Kl.15

18 14

81 12 B− 13

D+

DF

D−

11 80 10

EP 0 440 754 B1

FIG.4